# EUROPÄISCHE PATENTSCHRIFT

(11) **EP 2 553 400 B1**
(45) Veröffentlichungstag und Bekanntmachung des Hinweises auf die Patenterteilung: **04.11.2015**
(21) Anmeldenummer: 11714691.0
(22) Anmeldetag: 29.03.2011
(51) Int. Cl.: G01D 5/245

(54) **MAGNETISCHER DREHGEBER**
MAGNETIC ROTARY ENCODER
CAPTEUR DE ROTATION MAGNÉTIQUE

(30) Priorität: 20.05.2010 DE 102010022154; 08.04.2010 DE 102010014272; 30.03.2010 DE 102010013444
(43) Veröffentlichungstag der Anmeldung: 06.02.2013
(73) Patentinhaber: Mehnert, Walter, 85521 Ottobrunn (DE); Theil, Thomas, 82340 Feldafing (DE)
(72) Erfinder: Mehnert, Walter, 85521 Ottobrunn (DE); Theil, Thomas, 82340 Feldafing (DE)
(74) Vertreter: Strasser, Wolfgang
(86) Internationale Anmeldenummer: PCT/EP2011/001575
(87) Internationale Veröffentlichungsnummer: WO 2011/124348

(56) Entgegenhaltungen:
- EP-A2- 1 813 910
- US-A1- 2008 074 102

## Beschreibung

Die Erfindung betrifft einen magnetischen Drehgeber der im Oberbegriff von Anspruch 1 genannten Art.

In der EP1 243 891 B1 wird ein Drehgeber mit einem Betätigungselement in Form eines Permanentmagneten vorgeschlagen, der die Magnetfelder bereitstellt, die für die absolute Messung des Feinpositionswertes erforderlich sind, die mit Hilfe einer Vierquadranten-Hallsonde erfolgt, deren Hallelemente über Kreuz verbunden sind. Amplitude und Homogenität des Magnetfeldes spielen dabei eine wichtige Rolle.

In der US2008074102 wird ein magnetischer Drehgeber offenbart, der zur Feinauflösung des Drehwinkels einer Welle wenigstens zwei magnetfeldempfindliche Elemente umfasst, die so angeordnet sind, dass sie das Feld eines Zentralfeldraums zur Messung nutzen können.

Verwendet man in diesem Zusammenhang einen einzigen, zweipoligen Permanentmagneten, so führt dies zu dem Nachteil, dass eine solche Anordnung nur die Nutzung der Rückschluss- oder so genannten Streufelder des Permanentmagneten erlaubt, die weder homogen noch besonders stark sind noch in einem linearen Zusammenhang mit dem Drehwinkel stehen. Insbesondere erweist sich die geringe Feldstärke der genutzten Streufelder als Handicap, weil schwache Felder eine hohe elektrische Verstärkung erfordern und damit zu einem erhöhten Rauschen führen. Die Anfälligkeit gegen von außen kommende Störfelder und die Eigenstörung wachsen dabei mit fallender Feldstärke. Somit liegt der Erfindung die Aufgabe zugrunde, einen Drehgeber der eingangs genannten Art so weiterzubilden, dass insbesondere für die Feinpositionswert-Messung ein Magnetfeld mit größerer Feldstärke und/oder besserer Homogenität und/oder besserer Linearität zur Verfügung steht.

Zur Lösung dieser Aufgabe sieht die Erfindung die im Anspruch 1 niedergelegten Merkmale vor.

Gemäß der Erfindung ist der aus dem Stand der Technik bekannte, einzelne Permanentmagnet quasi in zwei Teile zerschnitten, die in etwa symmetrisch zur Drehachse mit einem gegenseitigen Abstand so angeordnet sind, dass ihre sich durch ihren jeweiligen Schwerpunkt erstreckenden Magnetisierungsvektoren bezogen auf die gemeinsamen Feldlinien in gleicher Richtung verlaufen und einen Zentralfeldraum bilden, in dem ein für die Feinauflösungs-Sensoreinheit wesentlich günstigeres Magnetfeld vorhanden ist, das je nach Ausführungsform eine bessere Homogenität und/oder Linearität als die Streufelder eines Permanentmagneten aufweist und das im Vergleich zu diesem eine größere Feldstärke besitzt.

Die durch den Anspruch 1 definierte Anordnung kann sowohl in Singleturns, d.h. Drehgebern, die nur zur Feinauflösung eines über 360° nicht hinausgehenden Drehwinkels dienen, als auch bei Multiturns, d.h. Drehgebern verwendet werden, bei denen zusätzlich zur Feinauflösung auch noch die durchlaufenen Umdrehungen gezählt werden sollen.

Ein quasiabsoluter, fein auflösender und Umdrehungen zählender Drehgeber kann unabhängig von elektrischer Fremdversorgung die durchlaufenen Umdrehungen zählen und bei Anliegen einer Fremdversorgung einen fortlaufenden Winkelwert liefern, der sich aus einem Feinpositionswert innerhalb einer Umdrehung und einem Umdrehungs-Zählwert zusammensetzt. Bezogen auf die Anzahl der zählbaren Umdrehungen und die Nutzungsdauer weist er aber Einschränkungen auf, die ein absoluter Drehgeber nicht hat. Zu den quasiabsoluten Drehgebern gehören z.B. Getriebelösungen, batteriegestützte Systeme oder Drehgeber mit einer Mehrgangssensorik, die mit ausgerichteten magnetischen Domänen arbeiten und in den von der Fa. Novotechnik unter der Bezeichnung "Multiturn-Sensor kontaktlos, Baureihe RSM2800 analog" angebotenen Drehgebern eingesetzt werden.

Bei dem in der DE 102 59 223 B3 beschriebenen, absoluten Umdrehungszähler gibt es derartige Beschränkungen nicht. Die für eine Zählung der Umdrehungen und die Speicherung des Zählwertes benötigte Energie wird dort aus der Bewegungsenergie des zu überwachenden Körpers gewonnen. Der kritische Fall, dass dessen Geschwindigkeit gegen Null geht, wird dadurch gelöst, dass über eine gewisse Strecke Energie kumuliert und an einem vorgebbaren Punkt schlagartig freigesetzt wird. Dies erfolgt mit Hilfe eines Wiegandelementes, dessen vorgespannter Wiegand-Draht zu einer magnetischen Domäne ausgebildet ist, die durch ein externes Magnetfeld zum Umklappen gebracht wird. Dabei läuft eine Blochwand, d.h. ein Grenzgebiet zwischen den Domänen, in etwa mit Schallgeschwindigkeit über den Wiegand-Draht und erzeugt in der umschließenden Spule einen Spannungsimpuls, der eine Zahl- und Speichereinheit versorgt. Die Auslösung und Vorspannung des Wiegand-Drahtes hängt von der Homogenität des Magnetfeldes, insbesondere von dessen Amplitude ab. Als Betätigungselement wird ein Permanentmagnet benutzt.

Gemäß Anspruch 3 sind bei einer ersten Hauptvariante des erfindungsgemäßen Drehgebers die beiden Permanentmagnete so angeordnet, dass ihre Magnetisierungsvektoren auf einer gemeinsamen, senkrecht zur Drehachse verlaufenden Geraden liegen. Es sind also zwei voneinander einen axialen Abstand aufweisende, gleich orientierte und vorzugsweise gleich große, d.h. hinsichtlich ihrer jeweiligen Magnetfelder gleich starke Permanentmagnete vorhanden, deren Magnetisierungsvektoren miteinander fluchten. Dabei ist der Nordpol des einen der beiden Permanentmagnete dem Südpol des anderen zugewandt. Auf diese Weise ist insbesondere dann, wenn der axiale Abstand zwischen den beiden Permanentmagneten klein gehalten wird, in ihrem Zwischenraum, der hier als Zentralfeldraum bezeichnet wird, ein außerordentlich starkes und homogenes Hauptfeld vorhanden, dessen mit einer feststehenden Feinauflösungs-Sensoreinheit erfassbare Feldstärke sich sinusförmig mit dem Drehwinkel ändert, den die Erregereinheit bezüglich der Feinauflösungs-Sensoreinheit einnimmt.

Bei einer ersten Untervariante ist dann direkt in diesem Zentralfeldraum zumindest die Feinauflösungs-Sensoreinheit angeordnet, für die somit optimale Feldverhältnisse erreicht werden. Allerdings ist es hier erforderlich, dann, wenn als Feinauflösungs-Sensoreinheit eine Hallsonden-Anordnung verwendet wird, deren Messebene senkrecht zur Drehachse liegt, für eine Feldumlenkung Sorge zu tragen, damit die zunächst ebenfalls zur Drehachse senkrechten magnetischen Feldlinien des Zentralfeldraums eine zur Messebene senkrechte Komponente erhalten. Diese Umlenkung kann mit Hilfe eines ferromagnetischen Plättchens erfolgen, das mit der Hallsonden-Anordnung drehfest verbunden ist, d.h. also die Drehung des Magnetfeldes nicht mit macht, wie dies aus dem Stand der Technik bekannt ist.

Nachteilig hieran ist, dass bei der durch die Drehbewegung bedingten Feldstärkenänderung des Magnetfeldes, welches das ferromagnetische Plättchen durchsetzt, in letzterem Hystereseeffekte auftreten, die zu Fehlern im Messsignal führen.

Um dieses Problem zu beseitigen, ist bei einer zweiten erfindungsgemäßen Untervariante vorgesehen, die Feinauflösungs-Sensoreinheit nicht unmittelbar im Zentralfeldraum selbst aber doch in solcher Nähe zu ihm anzuordnen, dass sie dessen vorteilhafte Feldbedingungen für die Winkelmessung nutzen kann.

Zu diesem Zweck ist es möglich, die Feinauflösungs-Sensoreinheit außerhalb des eigentlichen Zentralfeldraums in Richtung der Drehachse versetzt zu positionieren und auf ihrer vom Zentralfeldraum abgewandten Seite einen sich mit der Erregereinheit mitdrehenden ferromagnetischen Umlenkkörper vorzusehen, der wesentliche Teile des Feldes aus dem Zentralfeldraum herauszieht und dabei so verformt, dass die betreffenden Feldlinien die aktive Fläche bzw. Flächen der Feinauflösungs-Sensoreinheit mit einer senkrechten Komponente durchsetzen. Im Idealfall wird hier aus einem homogenen Feld zwischen den Magneten ein Sinusfeld an einem runden Umlenkkörper. Wenn eine solche Drehgeberanordnung an einer Welle zum Einsatz kommt, die aus ferromagnetischem Material besteht, so kann diese Welle unmittelbar selbst die Funktion eines solchen Umlenkkörpers ausüben. Ist dies nicht möglich, kann ein entsprechendes ferromagnetisches Plättchen verwendet werden, das so montiert ist, dass es sich mit der Erregereinheit mitdreht.

Mit einer solchen Anordnung bleibt also die sinusförmige Abhängigkeit der von der Feinauflösungs-Sensoreinheit erfassten Feldstärke von Drehwinkel erhalten. Da sich die Feldstärke des den ferromagnetischen Umlenkkörper durchsetzenden Feldes nicht ändert, weil dieser die Drehung der Permanentmagnetanordnung der Erregereinheit mit macht, können auch keine Hystereseeffekte auftreten.

Ein besonderer Vorteil der beiden bisher beschriebenen, erfindungsgemäßen Untervarianten ist darin zu sehen, dass sie einen minimalen Durchmesser des gegen äußere Störfelder abgeschirmten Drehgebers ermöglichen. Eine für diese Entstörung notwendige ferromagnetische Haube muss bei einer dem Stand der Technik entsprechenden Anordnung, bei der die Feinauflösungs-Sensoreinheit notwendigerweise im Streufeldbereich des oder der Permanentmagnete der dortigen Erregereinheit angeordnet ist, zu den Magnetpolen einen beträchtlichen Mindestabstand einhalten, da sie sonst das Streufeld schwächt, sodass dieses nicht mehr für die Feinpositionsmessung ausreicht. Diesen Nachteil beseitigen die beschriebenen erfindungsgemäßen Lösungen, da bei ihnen entweder direkt im Hauptfeld zwischen den beiden Permanentmagneten oder in dessen unmittelbarer Nähe gemessen wird, das nicht nur wesentlich größer und homogener als das Streufeld ist, sondern durch eine möglicherweise zur Abschirmung erforderliche, bis unmittelbar an die außen liegenden Pole der beiden Permanentmagnete heranreichende Eisenhaube über die Verschiebung des Arbeitspunktes sogar leicht erhöht wird. Somit können eine solche Abschirmhaube und damit der gesamte Drehgeber einen deutlich kleineren Durchmesser als beim Stand der Technik aufweisen.

Gemäß Anspruch 4 verlaufen bei einer zweiten Hauptvariante die Magnetisierungsvektoren der beiden ersten Permanentmagnete parallel zu der zwischen ihnen liegenden Drehachse und weisen dabei geometrisch in entgegengesetzte Richtungen. Dadurch ergibt sich in dem zwischen den beiden Permanentmagneten liegenden Zentralfeldraum eine parallel zur Drehachse liegende "Null-Linie" längs derer sich die Magnetfelder der beiden Permanentmagnete gegenseitig aufheben. Um diese Null-Linie herum ist ein Magnetfeld vorhanden, dessen zu messende Komponente direkt dem Betrag des Feldvektors entspricht, der sich mit dem Drehwinkel sinusförmig ändert. Die Feldlinien in diesem Zentralfeldraum verlaufen zumindest in der durch die Feinauflösungs-Sensoreinheit genutzten, unmittelbaren Umgebung der Null-Linie in etwa parallel zur Drehachse, sodass sie die hierzu senkrechte Messebene einer Hallsonden-Anordnung ohne die Verwendung eines Umlenkkörpers in der erforderlichen Weise senkrecht durchsetzen. Dadurch, dass hier kein Umlenkkörper vorhanden ist, können auch keine Hysteresefehler auftreten.

Für die Anordnung der Feinauflösungs-Sensoreinheit und des Zählmoduls zentriert zur Drehachse können prinzipiell zwei verschiedene Trägerplatinen verwendet werden, doch ist vorzugsweise eine einzige Platine vorgesehen, an der die Feinauflösungs-Sensoreinheit und das Zählmodul so montiert sind, dass sie sich auf deren gegenüberliegenden Seiten befinden. Diese Einplatinenvariante ist die kostengünstigste und für die Positionierung einfachste Lösung.

Wird als Zähl-Sensoranordnung ein Wiegandelement mit einem magnetosensitiven Element verwendet, so besteht die Speichereinheit vorzugsweise aus einem FRAM-Speicher mir der entsprechenden Messelektronik.

Befinden sich das Wiegandelement und das zugehörige magnetosensitive Element im Hauptfeld der beiden ersten Permanentmagnete, so stellt dies insofern die kostengünstigste Lösung dar, wenn an die Feinauflösung keine besonders hohen Anforderungen gestellt werden.

Befindet sich das Wiegandelement im gemeinsamen Streufeld der beiden ersten Permanentmagnete, so stellt dies die kostengünstigste Lösung dar, wenn an die Kleinheit der Baugröße keine extremen Anforderungen gestellt werden.

Es ist vorteilhaft, das bei der Zählung zur Drehrichtungserkennung dienende magnetosensitive Element und die Feinauflösungs-Sensoreinheit zu einem Messmodul zusammen zu fassen, weil diese Elemente dann als eine einzige integrierte Schaltung ausgebildet werden können und das Problem der Unterbringung des magnetosensitiven Elements automatisch eliminiert wird.

Die in jeder Hinsicht optimale Lösung besteht darin, dass zwei weitere Permanentmagnete vorgesehen sind, deren Magnetisierungsvektoren parallel zu denen der beiden ersten Permanentmagnete verlaufen und deren Hauptfeld schwächer als das der beiden ersten Permanentmagnete ist, und dass sich das Wiegandelement im Hauptfeld der beiden weiteren Permanentmagnete befindet. Hierdurch wird eine optimale Anpassung der Feldstärken der beiden Hauptfelder an die Erfordernisse des Wiegandelementes einerseits und der Feinauflösungs-Sensoreinheit andererseits erreicht.

Weitere vorteilhafte Ausgestaltungen und Weiterbildungen eines erfindungsgemäßen Drehgebers sind in den Unteransprüchen niedergelegt.

Die Erfindung wird im Folgenden anhand von Ausführungsbeispielen unter Bezugnahme auf die Zeichnung beschrieben; in dieser zeigen:
- Fig. 1: eine stark schematisierte Seitenansicht einer ersten Ausführungsform eines erfindungsgemäßen Drehgebers, bei dem die Magnetisierungsvektoren der beiden ersten Permanentmagnete auf einer gemeinsamen, senkrecht zur Drehachse verlaufenden Geraden liegen und die von einem Wiegandelement gebildete Zähl-Sensoreinheit im Streufeldbereich der beiden ersten Permanentmagnete angeordnet ist,
- Fig. 2: eine Draufsicht auf den Drehgeber aus Fig. 1, wobei der Deutlichkeit halber die Zähl-Sensoreinheit weggelassen ist,
- Fig. 3: eine der Fig. 1 entsprechende Seitenansicht einer zweiten Ausführungsform eines erfindungsgemäßen Drehgebers, bei dem die Magnetisierungsvektoren der beiden ersten Permanentmagnete ebenfalls auf einer gemeinsamen, senkrecht zur Drehachse verlaufenden Geraden liegen und die von einem Zählmodul gebildete Zähl-Sensoreinheit im Streufeldbereich der beiden ersten Permanentmagnete angeordnet ist
- Fig. 4: eine Draufsicht auf den Drehgeber aus Fig. 3, wobei der Deutlichkeit halber die Zähl-Sensoreinheit weggelassen ist

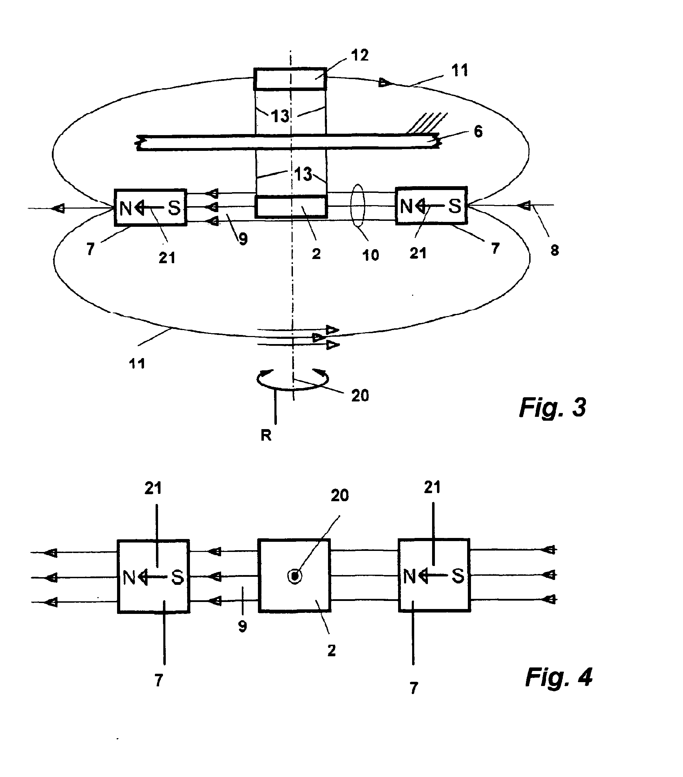

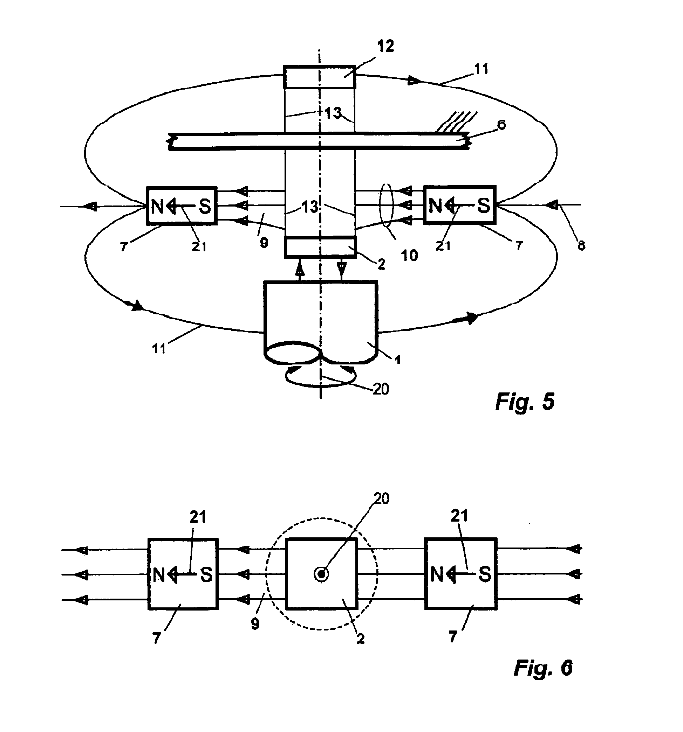

- Fig. 5: eine der Fig. 3 entsprechende Seitenansicht einer dritten Ausführungsform eines erfindungsgemäßen Drehgebers, bei dem die Magnetisierungsvektoren der beiden ersten Permanentmagnete wiederum auf einer gemeinsamen, senkrecht zur Drehachse verlaufenden Geraden liegen, die von einem Zählmodul gebildete Zähl-Sensoreinheit im Streufeldbereich der beiden ersten Permanentmagnete angeordnet und die Feinauflösungs-Sensoreinheit in axialer Richtung aus dem Zentralfeldraum herausgerückt ist und ein ferromagnetischer Umlenkkörper für einen senkrechten Feldliniendurchsatz durch die aktive(n) Fläche(n) der Feinauflösungs-Sensoreinheit sorgt,
- Fig. 6: eine Draufsicht auf den Drehgeber aus Fig. 5,
- Fig. 7: eine der Fig. 1 entsprechende Seitenansicht einer vierten Ausführungsform eines erfindungsgemäßen Drehgebers, bei dem die Magnetisierungsvektoren der beiden ersten Permanentmagnete wiederum auf einer gemeinsamen, senkrecht zur Drehachse verlaufenden Geraden liegen und die von einem Wiegandelement gebildete Zähl-Sensoreinheit im Zentralfeldraum eines zweiten Permanentmagnetpaares angeordnet ist, das koaxial zu den beiden ersten Permanentmagneten ausgerichtet ist, in deren Zentralfeldraum sich die Feinauflösungs-Sensoreinheit befindet,
- Fig. 8: eine Draufsicht auf den Drehgeber aus Fig. 7,
- Fig. 9: eine der Fig. 1 entsprechende Seitenansicht einer fünften Ausführungsform eines erfindungsgemäßen Drehgebers, bei dem die Magnetisierungsvektoren der beiden ersten Permanentmagnete räumlich einander entgegengesetzt und parallel zur Drehachse gerichtet sind und die von einem Wiegandelement gebildete Zähl-Sensoreinheit im Streufeldbereich der beiden ersten Permanentmagnete angeordnet ist, und
- Fig. 10: eine Draufsicht auf den Drehgeber aus Fig. 7, wobei der Deutlichkeit halber die Zähl-Sensoreinheit weggelassen ist.

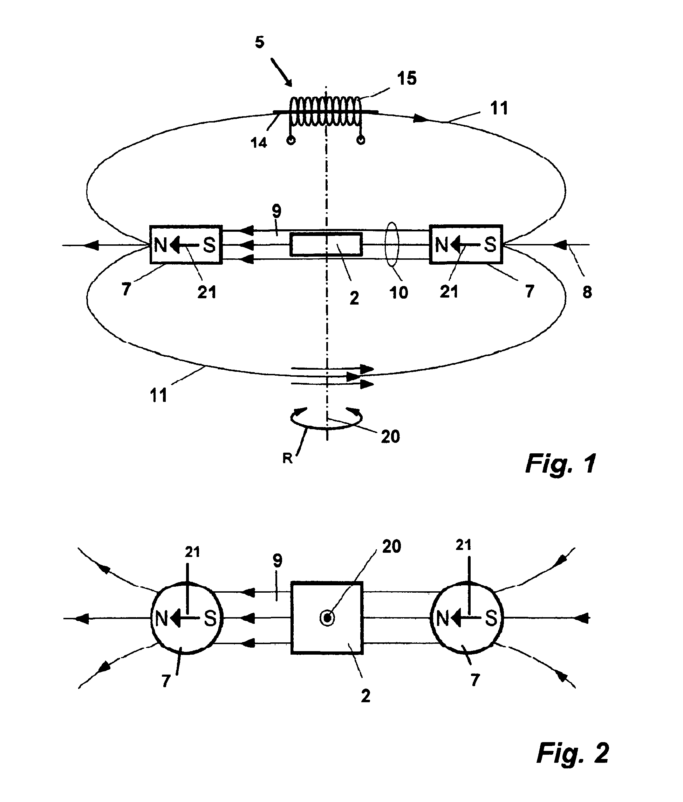

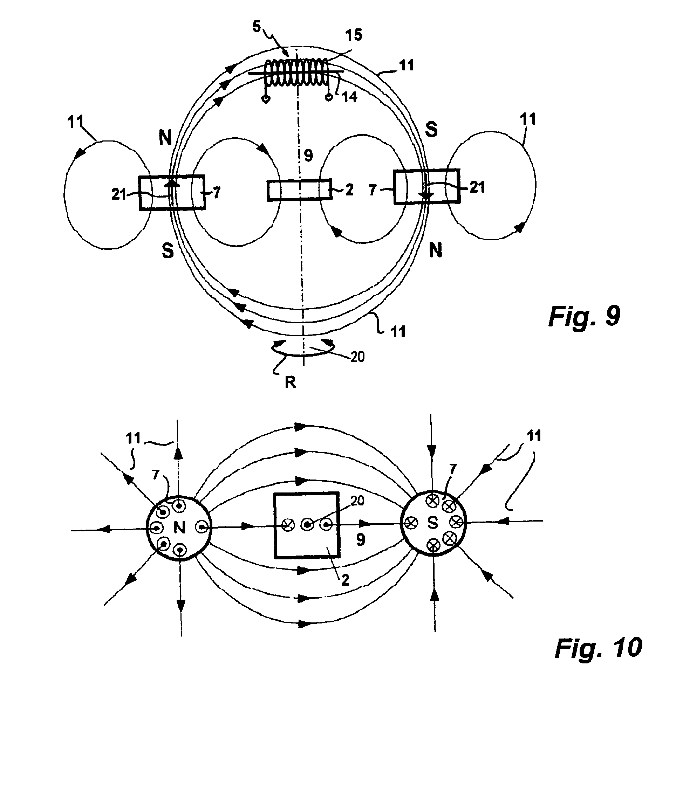

Es sei betont, dass die Figuren nicht maßstabsgetreu sind. Gleiche Elemente in den verschiedenen Figuren sind mit den gleichen Bezugszeichen versehen. Die in den Fig. 1 mit 8 dargestellten Drehgeber sind Beispiele für die zuvor erläuterte erste Hauptvariante, wobei Ausführungsformen gemäß der ersten Untervariante den Fig. 1 mit 4 und 7, 8 entnommen werden können, während ein Beispiel für die zweite Untervariante in den Fig. 5 und 6 wiedergegeben ist. Die Fig. 9 und 10 zeigen eine Ausführungsform gemäß der zweiten Hauptvariante.

In Fig. 1 sind zwei erste Permanentmagnete 7, 7 dargestellt, deren Magnetisierungsvektoren 21, 21 so miteinander fluchten, dass sie auf einer gemeinsamen, senkrecht zur Drehachse 20 des Drehgebers verlaufenden Geraden 8 liegen. Diese beiden Permanentmagnete 7, 7 bilden einen Bestandteil der Erregereinheit des erfindungsgemäßen Drehgebers, die mit dem in Richtung des Doppelpfeils drehbaren Körper, beispielsweise einer (nur in Fig. 5 dargestellten) Welle drehfest verbunden ist.

Wie man sieht, weisen die beiden gleich orientierten Permanentmagnete 7, 7 in Richtung ihrer Magnetisierungsvektoren 21, 21 einen Abstand auf, welcher der Deutlichkeit halber insbesondere im Vergleich zu der sich in Richtung der Drehachse 20 erstreckenden Höhe der Permanentmagnete 7, 7 stark vergrößert dargestellt ist. Der Nordpol des in Fig. 1 rechts befindlichen Permanentmagneten 7 ist dem Südpol des links angeordneten Permanentmagneten 7 zugewandt. Zwischen diesen beiden Magnetpolen ist ein Zentralfeldraum 9 mit einem äußerst homogenen und starken Magnetfeld 10 ausgebildet, das vom Drehwinkel der Erregereinheit bezüglich der dort feststehend angeordneten, d. h. die Rotation der Permanentmagnete 7, 7 um die Drehachse 20 nicht mitmachenden Feinauflösungs-Sensoreinheit 2 sinusförmig abhängig ist. Bei der Feinauflösungs-Sensoreinheit 2 kann es sich beispielsweise um eine Vierquadranten-Hallsonde handeln, deren Hallelemente über Kreuz verbunden sind. Da hier die einzelnen Hallelemente in einer in Fig. 1 horizontalen, durch die Gerade 8 verlaufenden Ebene liegen, werden Melexis-Hallelemente verwendet, bei denen parallel zur Messebene, d.h. zur magnetfeldempfindlichen Oberfläche angeordnete ferromagnetische Plättchen für eine Feldumlenkung sorgen.

Die beiden ersten Permanentmagnete 7, 7 bilden das gemeinsame Streufeld 11, in welchem eine für die Umdrehungszählung dienende, ebenfalls feststehende Zähl-Sensoreinheit angeordnet ist, die von einem Wiegandelement 5 gebildet wird, das aus einem Wieganddraht 14 und einer diesen umschließenden Spule 15 besteht, die zumindest immer dann, wenn die Gerade 8 je voller Umdrehung wenigstens eine vorgegebene Winkelstellung durchläuft, einem Umdrehungs-Zählimpuls abgibt, dessen Energie im Falle eines Ausfalls der Fremdenergieversorgung auch zur Energieversorgung einer (nicht dargestellten) Zähl- und Speichereieinheit dienen kann, wie dies beispielsweise aus der eingangs erwähnten DE 102 59 223 B1 bekannt ist. Zur Drehrichtungserkennung kann ein (nicht dargestelltes) magnetosensitives Element, beispielsweise ein einzelnes Hall-Element vorgesehen und mit der Feinauflösungs-Sensoreinheit 2 zu einem Messmodul zusammengefasst sein. Jeder der beiden Permanentmagnete 7, 7 bildet auch ein individuelles Streufeld, dessen Feldlinienverlauf der Deutlichkeit halber nicht wiedergegeben ist.

Wie man der Fig. 2 entnimmt, sind bei diesem Ausführungsbeispiel die Permanentmagnete 7, 7 kreisscheibenförmige, diametral magnetisierte Magnete, die sich durch besondere Homogenität auszeichnen.

Das in Fig. 3 gezeigte Ausführungsbeispiel unterscheidet sich von dem der Fig. 1 dadurch, dass die im Streufeld 11 der ersten Permanentmagnete 7, 7 angeordnete Zähl-Sensoreinheit von einer mit ausgerichteten magnetischen Domänen arbeitenden Mehrgangssensorik gebildet ist, die gemeinsam mit der notwendigen Messelektronik ein Zählmodul 12 bildet. Eine solche Mehrgangssensorik ist beispielsweise in einem vorläufigen Datenblatt der Fa. Novotechnik mit der Bezeichnung "Multiturn-Sensor kontaktlos, Baureihe RSM2800 analog" beschrieben.

Weiterhin ist schematisch eine feststehende Platine 6 dargestellt, auf deren Unterseite die Feinauflösungs-Sensoreinheit 2 und auf deren Oberseite das Zählmodul 12 jeweils mit Hilfe von Halterungselementen 13, 13 zentriert zur Drehachse 20 montiert sind. Diese Platine dient gleichzeitig zur elektrischen Verdrahtung dieser Einheiten 2und 12. Die Platine 6 ist erfindungsgemäß so positioniert, dass sich die Feinauflösungs-Sensoreinheit 2 im Zentralfeldraum 9 und das Zählmodul 12 im gemeinsamen Streufeld 11 der beiden ersten Permanentmagnete 7,7 befinden.

Der Fig. 4 kann man entnehmen, dass die beiden ersten Permanentmagnete 7, 7 quaderförmig ausgebildet und in einer ihrer Trägheitsachsen magnetisiert sind.

Gleiches gilt auch für die beiden Permanentmagnete 7, 7 des in den Fig. 5 und 6 dargestellten Ausführungsbeispiels, das sich von den vorausgehend beschriebenen Ausführungsbeispielen dadurch unterscheidet, dass die Feinauflösungs-Sensoreinheit 2 in axialer Richtung etwas nach unten versetzt zwar außerhalb des eigentlichen Zentralfeldraums 9 aber doch so nahe an diesem angeordnet ist, dass sie das dort herrschende Feld 10 zur Messung des Drehwinkels nutzen kann. Damit die hier wiederum senkrecht zur Drehachse 20 ausgerichteten aktiven Flächen der von Hallelementen gebildeten magnetosensitiven Elemente der Feinauflösungs-Sensoreinheit 2 von Magnetfeldlinien mit senkrechter Komponente durchsetzt werden, ist ein ferromagnetischer Umlenkkörper vorgesehen, der hier von der zu überwachenden Welle 1 selbst gebildet wird. Das in der Fig. 5 obere Stirnende ist so nahe an den Zentralfeldraum 9 herangeführt, dass es einen Teil des in ihm herrschenden, starken und homogenen Feldes so absaug", dass die Hallelemente der Feinauflösungs-Sensoreinheit 2 in der erforderlichen Weise von Magnetfluss durchsetzt werden. Die sinusförmige Winkel- bzw. Drehstellungsabhängigkeit des Magnetfeldes 10 bleibt für die "abgesaugten" Anteile voll erhalten, weil aus dem homogenen Feld zwischen den Magneten ein Sinusfeld am wellenförmigen Umlenkkörper wird.

Der Vorteil dieser Anordnung besteht darin, dass sich die magnetische Feldstärke im Umlenkkörper, der auch von einem dem Stirnende der Welle 1 entsprechenden, gesonderten ferromagnetischen Körper gebildet werden könnte, nicht ändert, da er sich mit den Permanentmagneten 7, 7 der Erregereinheit mitdreht. Auf diese weise werden Hystereseeffekte vermieden, die ansonsten zu Messfehlern führen würden.

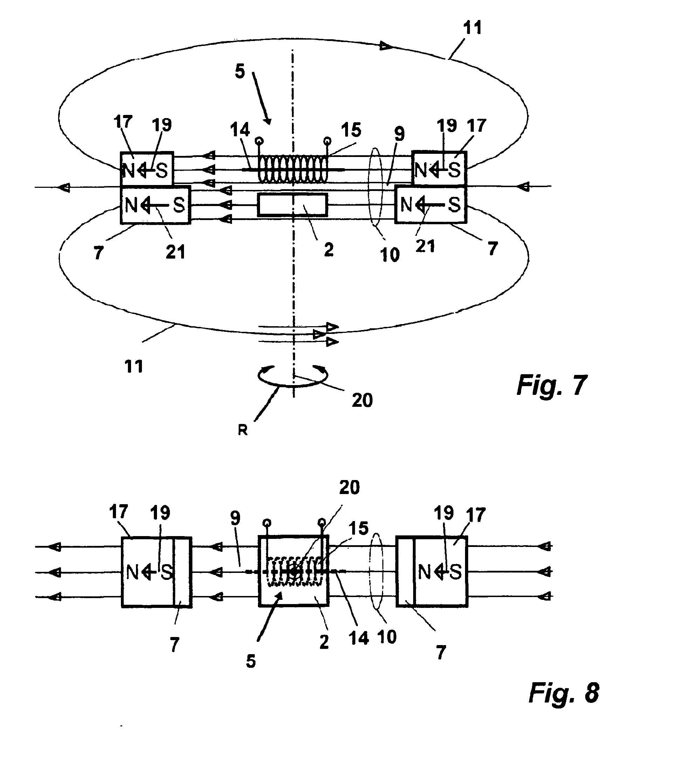

Bei dem in den Fig. 7 und 8 dargestellten Ausführungsbeispiel sind die beiden ersten Permanentmagnete 7, 7 ebenfalls quaderförmig ausgebildet und in einer ihrer Trägheitsachsen magnetisiert. Zusätzlich sind hier zwei weitere Permanentmagnete 17, 17 vorgesehen sind, die unmittelbar oberhalb der beiden ersten Permanentmagnete 7, 7 in gleicher Weise wie diese, jedoch mit einem größeren gegenseitigen Abstand so angeordnet sind, dass sich ihre Magnetisierungsvektoren 19, 19 parallel zu den Magnetisierungsvektoren 21, 21 der ersten Permanentmagnete 7, 7 erstrecken. In erster Näherung erweitern die weiteren Permanentmagnete 17, 17 den homogenen Zentralfeldraum 9 in Richtung der Drehachse 20, sodass in ihm die feststehende Zähl-Sensoreinheit positioniert werden kann, die wiederum von einem Wiegandelement 5 gebildet ist, das aus einem Wieganddraht 14 und einer diesen umschließenden Spule 15 besteht und in der gleichen Weise arbeitet, wie dies unter Bezugnahme auf die Fig. 1 und 2 beschrieben wurde.

In Fig. 7 liegen die Unterseiten der zweiten Permanentmagnete 17, 17 direkt auf den Oberseiten der ersten Permanentmagnete 7, 7 auf. Hier kann auch ein Abstand in Richtung der Drehachse 20 vorhanden sein. An Stelle eines Wiegandelementes 5 kann sich auch ein Zählmodul 12 im Hauptfeld der ersten Permanentmagnete 7, 7 oder der weiteren Permanentmagnete 17, 17 befinden, wobei sich zwischen dem Zählmodul 12 und der Feinauflösungs-Sensoreinheit 2 eine gemeinsame Montageplatine befinden kann.

Bei dem in den Fig. 9 und 10 gezeigten Ausführungsbeispiel verlaufen die Magnetisierungsvektoren 21, 21 der beiden Permanentmagnete 7, 7 parallel zur Drehachse 20 und sind einander räumlich entgegengerichtet, verlaufen in magnetischer Hinsicht aber bezogen auf die gemeinsamen Feldlinien der beiden Permanentmagnete 7, 7 in der gleichen Richtung, die auch hier wie bei den anderen Ausführungsbeispielen "in Reihe geschaltet" sind. Sie sind so angeordnet, dass die Drehachse 20 in etwa in der Mitte ihres gegenseitigen Abstandes zwischen ihnen durch den Zentralfeldraum 9 der Permanentmagnete 7, 7 hindurch verläuft. In diesem Bereich gibt es eine neutrale Linie, längs derer sich die Magnetfelder der beiden Permanentmagnete 7, 7 gegenseitig aufheben und die im Idealfall, d.h. bei gleich starken Permanentmagneten 7, 7 und deren symmetrischer Anordnung zur Drehachse 20 mit letzterer zusammenfällt.

In unmittelbarer Umgebung dieser neutralen Linie, d.h. in dem so gebildeten Zentralfeldraum verlaufen die Magnetfeldlinien räumlich in entgegengesetzten Richtungen und mit guter Näherung parallel zur Drehachse 20, sodass die Feldlinien eine von der Feinauflösungs-Sensoreinheit 2 aufgespannte horizontale Ebene senkrecht und mit sinusförmiger Abhängigkeit vom Drehwinkel durchsetzen. Somit kann eine als Feinauflösungs-Sensoreinheit 2 dienende Hallelementanordnung ohne Feldumlenkungselemente eingesetzt werden.

Als zur Richtungserkennung dienendes magnetosensitives Element kann bei allen Ausführungsbeispielen auch ein GMR-Element verwendet werden.

## Patentansprüche

1. Magnetischer Drehgeber, der zur Feinauflösung des Drehwinkels einer Welle (1) folgendes umfasst:
- eine die zu überwachende Drehung abbildende und dabei um eine Drehachse (20) rotierende Erregereinheit, die zwei erste Permanentmagnete (7, 7) umfasst, die symmetrisch zur Drehachse mit einem gegenseitigen Abstand so angeordnet sind, dass ihre sich durch ihren jeweiligen Schwerpunkt erstreckenden Magnetisierungsvektoren (21, 21) bezogen auf die gemeinsamen Feldlinien in gleicher Richtung verlaufen und einen Zentralfeldraum (9) bilden, der die Permanentmagnete (7, 7) direkt verbindet,
- eine feststehende Feinauflösungs-Sensoreinheit (2) zur Feinauflösung einer jeden Umdrehung, die wenigstens zwei magnetosensitive Elemente umfasst und so angeordnet ist, dass sie das Feld (10) des Zentralfeldraums (9) zur Messung nutzen kann, und
- eine Verarbeitungselektronik,
**dadurch gekennzeichnet, dass** die magnetosensitiven Elemente der Feinauflösungs-Sensoreinheit (2) mit ihren senkrecht zur Drehachse ausgerichteten magnetfeldempfindlichen Flächen eine Messebene definieren, die senkrecht zur Drehachse (20) liegt.

2. Drehgeber nach Anspruch 1, **dadurch gekennzeichnet, dass** er als zumindest quasiabsoluter, die Drehungen der Welle (1) zählender Drehgeber aufgebaut ist und zusätzlich eine feststehende Zähl-Sensoreinheit (3) zur Erfassung zumindest der vollständigen Umdrehungen, und eine Zählwert-Speichereinheit zum Speichern der Umdrehungszählwerte umfasst.

3. Drehgeber nach Anspruch 1 oder 2, **dadurch gekennzeichnet, dass** die Magnetisierungsvektoren (21, 21) der beiden ersten Permanentmagnete (7, 7) miteinander fluchtend auf einer senkrecht zur Drehachse (20) verlaufenden Geraden (8) liegen.

4. Drehgeber nach Anspruch 1 oder 2, **dadurch gekennzeichnet, dass** die Magnetisierungsvektoren (21, 21) der beiden ersten Permanentmagnete (7, 7) parallel zu der zwischen ihnen liegenden Drehachse (20) verlaufen.

5. Drehgeber nach einem der vorhergehenden Ansprüche, **dadurch gekennzeichnet, dass** die Zähl-Sensoranordnung mit der Zählwert-Speichereinheit zu einem Zählmodul (12) zusammengefasst ist, das aus einer mit ausgerichteten magnetischen Domänen arbeitenden Mehrgangssensorik und der erforderlichen Messelektronik besteht..

6. Drehgeber nach Anspruch 5, **dadurch gekennzeichnet, dass** auch das Zählmodul (12) so angeordnet ist, dass es das Feld (10) des Zentralfeldraums (9) der beiden ersten Permanentmagnete (7, 7) zur Messung nutzen kann.

7. Drehgeber nach Anspruch 5, **dadurch gekennzeichnet, dass** sich das Zählmodul (12) im gemeinsamen Streufeld (11) der beiden ersten Permanentmagnete (7, 7) befindet.

8. Drehgeber nach einem der Ansprüche 1 bis 4, **dadurch gekennzeichnet, dass** die Zähl-Sensoranordnung aus einem Wiegandelement (5), das einen Wieganddraht (14) und eine ihn umschließende Spule (15) umfasst, und einem magnetosensitiven Element besteht und sich im Zentralfeldraum (9) der beiden ersten Permanentmagnete (7, 7) befindet.

9. Drehgeber nach einem der Ansprüche 1 bis 4, **dadurch gekennzeichnet, dass** die Zähl-Sensoranordnung aus einem Wiegandelement (5), das einen Wieganddraht (14) und eine ihn umschließende Spule (15) umfasst, und einem magnetosensitiven Element besteht und sich im gemeinsamen Streufeld (11) der beiden ersten Permanentmagnete (7, 7) befindet.

10. Drehgeber nach Anspruch 8 oder 9, **dadurch gekennzeichnet, dass** das magnetosensitive Element und die Feinauflösungs-Sensoreinheit (2) zu einem Messmodul zusammengefasst sind.

11. Drehgeber nach einem der Ansprüche 4 bis 10, **dadurch gekennzeichnet, dass** zwei weitere Permanentmagnete (17, 17) vorgesehen sind, deren Magnetisierungsvektoren (19, 19) parallel zu denen der beiden ersten Permanentmagnete (7, 7) verlaufen und deren Feld (16) im Zentralfeldraum (9) schwächer als das der beiden ersten Permanentmagnete (7, 7) ist, und dass sich das Wiegandelement (5) im Feld (16) der beiden weiteren Permanentmagnete (17, 17) im Zentralfeldraum (9) befindet.

12. Drehgeber nach einem der vorhergehenden Ansprüche, **dadurch gekennzeichnet, dass** die Feinauflösungs-Sensoreinheit (2) wenigstens ein Hallelement umfasst, mit dem eine Feldumlenkeinrichtung fest verbunden ist.

13. Drehgeber einem der vorhergehenden Ansprüche, **dadurch gekennzeichnet, dass** die Feinauflösungs-Sensoreinheit (2) wenigstens ein Hallelement umfasst, dem eine sich mit der Erregereinheit mitdrehende Feldumlenkeinrichtung zugeordnet ist.

## Claims

1. A magnetic rotary encoder which for the fine resolution of the rotational angle of a shaft (1) includes the following:
- an exciter unit which images the rotation to be monitored and thereby rotates about an axis of rotation (20), said exciter unit including two first permanent magnets (7, 7) which are disposed symmetrically with respect to the axis of rotation at a mutual spacing such that their magnetization vectors (21, 21) which extend through their respective center of gravity extend in the same direction in relation to the common field lines and form a central field space (9) which directly connects the permanent magnets (7, 7), and
- a stationary fine resolution sensor unit (2) for fine resolution of each revolution, said fine resolution sensor unit being so arranged that it can use the field (10) of the central field space (9) for measurement, and
- an electronic processing means,
**characterized in that** the magnetosensitive elements of the fine resolution sensor unit (2) define by their magnetic field-sensitive surfaces which are perpendicularly orientated with respect to the axis of rotation a measurement plane which is perpendicular to the axis of rotation (20).

2. A rotary encoder as set forth in claim 1 **characterized in that** it is in the form of an at least quasi-absolute rotary encoder counting the rotations of the shaft (1) and additionally includes a stationary counting sensor unit (3) for detecting at least the complete revolutions and a counting value storage unit for storing the revolution counting values.

3. A rotary encoder as set forth in claim 1 or claim 2 **characterized in that** the magnetization vectors (21, 21) of the two first permanent magnets (7, 7) are disposed in mutually aligned relationship on a straight line (8) extending perpendicularly to the axis of rotation (20).

4. A rotary encoder as set forth in claim 1 or claim 2 **characterized in that** the magnetization vectors (21, 21) of the two first permanent magnets (7, 7) extend parallel to the axis of rotation (20) which is between them.

5. A rotary encoder as set forth in one of the preceding claims **characterized in that** the counting sensor arrangement is combined with the counting value storage unit to implement a counting module (12) comprising a multiturn sensor means operating with oriented magnetic domains and the required electronic measuring means.

6. A rotary encoder as set forth in claim 5 **characterized in that** the counting module (12) is also so arranged that it can use the field (10) of the central field space (9) of the two first permanent magnets (7, 7) for measurement.

7. A rotary encoder as set forth in claim 5 **characterized in that** the counting module (12) is in the common leakage field (11) of the two first permanent magnets (7, 7).

8. A rotary encoder set forth in one of claims 1 through 4 **characterized in that** the counting sensor arrangement comprises a Wiegand element (5) including a Wiegand wire (14) and a coil (15) surrounding it and a magnetosensitive element and is disposed in the central field space (9) of the two first permanent magnets (7, 7).

9. A rotary encoder set forth in one of claims 1 through 4 **characterized in that** the counting sensor arrangement comprises a Wiegand element (5) including a Wiegand wire (14) and a coil (15) surrounding it and a magnetosensitive element and is disposed in the common leakage field (11) of the two first permanent magnets (7, 7).

10. A rotary encoder as set forth in claim 8 or claim 9 **characterized in that** the magnetosensitive element and the fine resolution sensor unit (2) are combined to form a measuring module.

11. A rotary encoder as set forth in one of claims 4 through 10 **characterized in that** there are provided two further permanent magnets (17, 17) whose magnetization vectors (19, 19) extend parallel to those of the two first permanent magnets (7, 7) and whose field (16) in the central field space (9) is weaker than that of the two first permanent magnets (7, 7) and **in that** the Wiegand element (5) is in the field (16) of the two further permanent magnets (17, 17) in the central field space (9).

12. A rotary encoder as set forth in one of the preceding claims **characterized in that** the fine resolution sensor unit (2) includes at least one Hall element to which a field deflection device is fixedly connected.

13. A rotary encoder as set forth in one of the preceding claims **characterized in that** the fine resolution sensor unit (2) includes at least one Hall element with which there is associated a field deflection device which rotates with the exciter unit.

## Revendications

1. Capteur de rotation magnétique, comprenant les éléments suivants pour la résolution fine de l'angle de rotation d'un arbre (1) :
- une unité d'excitation reproduisant la rotation à surveiller et rotative à cet effet autour d'un axe de rotation (20), comprenant deux premiers aimants permanents (7, 7) disposés symétriquement par rapport à l'axe de rotation, avec un espacement mutuel tel que leurs vecteurs de magnétisation (21, 21) passant par leur centre de gravité respectif s'étendent dans la même direction par rapport aux lignes de champ communes et forment un espace de champ central (9) reliant directement les aimants permanents (7, 7),
- une unité fixe de capteur à résolution fine (2) pour la résolution fine de chaque rotation, comprenant au moins deux éléments magnétosensibles et disposée de manière à pouvoir exploiter le champ (10) de l'espace de champ central (9) pour la mesure, et
- une électronique de traitement,
**caractérisé en ce que** les éléments magnétosensibles de l'unité de capteur à résolution fine (2) définissent par leurs surfaces sensibles aux champs magnétiques orientées perpendiculairement à l'axe de rotation un plan de mesure perpendiculaire à l'axe de rotation (20).

2. Capteur de rotation selon la revendication 1, **caractérisé en ce que** celui-ci est construit comme capteur de rotation au moins quasi-absolu comptant les rotations de l'arbre (1) et comprend en outre une unité fixe de capteur compteur (3) pour la détection des tours complets au moins, et une unité de mémorisation des valeurs de comptage pour la mémorisation des valeurs de comptage de tours.

3. Capteur de rotation selon la revendication 1 ou 2, **caractérisé en ce que** les vecteurs de magnétisation (21, 21) des deux premiers aimants permanents (7, 7) se trouvent en alignement sur des droites (8) s'étendant perpendiculairement à l'axe de rotation (20).

4. Capteur de rotation selon la revendication 1 ou 2, **caractérisé en ce que** les vecteurs de magnétisation (21, 21) des deux premiers aimants permanents (7, 7) s'étendent parallèlement à l'axe de rotation (20) qui se trouve entre eux.

5. Capteur de rotation selon l'une des revendications précédentes, **caractérisé en ce que** le dispositif de capteur compteur est regroupé avec l'unité de mémorisation des valeurs de comptage pour former un module de compteur (12), constitué d'un ensemble détecteur multiple fonctionnant avec des domaines magnétiques orientés, et de l'électronique de mesure exigée.

6. Capteur de rotation selon la revendication 5, **caractérisé en ce que** le module de compteur (12) est également agencé de manière à pouvoir exploiter le champ (10) de l'espace de champ central (9) des deux premiers aimants permanents (7, 7) pour la mesure.

7. Capteur de rotation selon la revendication 5, **caractérisé en ce que** le module de compteur (12) se trouve dans le champ de dispersion (11) commun des deux premiers aimants permanents (7, 7).

8. Capteur de rotation selon l'une des revendications 1 à 4, **caractérisé en ce que** le dispositif de capteur compteur est constitué d'un élément Wiegand (5) comprenant un fil Wiegand (14) et une bobine (15) entourant celui-ci, et d'un élément magnétosensible, et se trouve dans l'espace de champ central (9) des deux premiers aimants permanents (7, 7).

9. Capteur de rotation selon l'une des revendications 1 à 4, **caractérisé en ce que** le dispositif de capteur compteur est constitué d'un élément Wiegand (5) comprenant un fil Wiegand (14) et une bobine (15) entourant celui-ci, et d'un élément magnétosensible, et se trouve dans le champ de dispersion (11) commun des deux premiers aimants permanents (7, 7).

10. Capteur de rotation selon la revendication 8 ou 9, **caractérisé en ce que** l'élément magnétosensible et l'unité de capteur à résolution fine (2) sont regroupés pour former un module de mesure.

11. Capteur de rotation selon l'une des revendications 4 à 10, **caractérisé en ce que** deux autres aimants permanents (17, 17) sont prévus, dont les vecteurs de magnétisation (19, 19) s'étendent parallèlement à ceux des deux premiers aimants permanents (7, 7) et dont le champ (16) dans l'espace de champ central (9) est plus faible que celui des deux premiers aimants permanents (7, 7), et **en ce que** l'élément Wiegand (5) se trouve dans le champ (16) des deux autres aimants permanents (17, 17) dans l'espace de champ central (9).

12. Capteur de rotation selon l'une des revendications précédentes, **caractérisé en ce que** l'unité de capteur à résolution fine (2) comprend au moins un élément Hall auquel est fixement relié un dispositif de dérivation de champ.

13. Capteur de rotation selon l'une des revendications précédentes, **caractérisé en ce que** l'unité de capteur à résolution fine (2) comprend au moins un élément Hall auquel est associé un dispositif de dérivation de champ co-rotatif avec l'unité d'excitation.
